# EUROPEAN PATENT SPECIFICATION

(11) **EP 2 057 593 B1**
(45) Date of publication and mention of the grant of the patent: **10.12.2014**
(21) Application number: 07796935.0
(22) Date of filing: 19.07.2007
(51) Int. Cl.: H04N 7/173, G06Q 30/00, H04N 21/234, H04N 21/235, H04N 21/24, H04N 21/2543, H04N 21/258, H04N 21/435, H04N 21/44, H04N 21/442, H04N 21/61, H04N 21/658, H04N 21/81, H04N 7/16

(54) **A METHOD AND SYSTEM FOR INSERTING ADVERTISEMENT DATA INTO AN INTERNET PROTOCOL TELEVISION NETWORK**
VERFAHREN UND SYSTEM ZUM EINFÜGEN VON WERBEDATEN IN EIN INTERNET-PROTOKOLL-FERNSEHNETZ
PROCÉDÉ ET SYSTÈME POUR INTRODUIRE DES DONNÉES DE PUBLICITÉ DANS UN RÉSEAU DE TÉLÉVISION À PROTOCOLE INTERNET

(30) Priority: 11.08.2006 US 503517
(43) Date of publication of application: 13.05.2009
(73) Proprietor: AT&T Intellectual Property I, L.P., Reno, NV 89502 (US)
(72) Inventor: WALTER, Edward, A., Boerne, TX 78006 (US); HOWCROFT, Jerald, Robert, Beverly Hills, MI 48025 (US); ADAMS, Thomas, Hinman, San Antonio, TX 78258 (US)
(74) Representative: Asquith, Julian Peter
(86) International application number: PCT/US2007/016348
(87) International publication number: WO 2008/020952

(56) References cited:
- GB-A- 2 344 009
- US-A1- 2001 020 232
- US-A1- 2002 133 393
- US-A1- 2002 169 540
- US-A1- 2005 137 958
- US-A1- 2005 193 410
- US-A1- 2006 070 095
- US-A1- 2006 156 219

## Description

### FIELD OF THE DISCLOSURE

The present disclosure relates generally to delivering targeted advertisements.

### BACKGROUND

Advertisers can potentially save advertisement dollars by targeting their advertisements rather than indiscriminately broadcasting their advertisements to a general population of recipients, Advertisement distributors and providers that enable a targeting advertisement model can correspondingly increase their revenue per advertisement impression by providing targeted advertisement options for advertisers.

Targeted advertisements have historically been sent to large targeted geographic areas such as a particular city, so that regional advertisers reach only those advertisement recipients who are deemed by the advertiser as most likely to be responsive to their advertisements. US 2005/0193410 describes a targeted advertising system for storing targeted advertising at a centralised location and splicing the targeted advertising related to a subgroup of subscribers at a predetermined fixed locations into program content. The system relies on subscribers viewing program content from predetermined fixed locations, e.g. a subscriber's set-top box. US 2002/0133393 describes a viewing information collection system for use in supplying advertisers and broadcast stations with marketing information or viewer profiles of the viewers of broadcast entertainment, which allows advertisers to provide viewers with targeted advertisements.

### SUMMARY OF THE INVENTION

Several aspects of the invention provide a method and a system for distributing advertisement in an internet protocol television system as set forth in claims 1 and 8, respectively. Further aspects of the invention provides a computer readable medium as set forth in claim 14 and a data structure in a memory as set forth in claim 15.

### BRIEF DESCRIPTION OF THE DRAWINGS

**FIG. 1** is a schematic diagram of an illustrative embodiment of a high level example of an internet protocol television (IPTV) Service Provider Network Architecture;
**FIG. 2** is a schematic diagram of an illustrative embodiment of a schematic illustration of a billing and advertisement service activation architecture in the IPTV system;
**FIG. 3** is a schematic diagram of an illustrative embodiment of a breakdown of the functions performed in relation to the architecture depicted in **FIG. 2**;
**FIG. 4** is a flow chart showing functions performed in an illustrative embodiment;
**FIG. 5** is a schematic diagram of an illustrative embodiment showing a home zone and a travel zone in an IPTV network;
**FIG. 6** is an illustration of a data structure provided in an illustrative embodiment; and
**FIG. 7** is an illustrative embodiment of a machine for performing functions disclosed.

### DETAILED DESCRIPTION

In a particular embodiment a method for distributing advertisement in an internet protocol television (IPTV) system is disclosed. The method includes accepting at an IPTV server, targeted advertisement data from an advertisement client targeting a segment selected from an IPTV subscriber population based on IPTV subscriber profile data; inserting the targeted advertisement data into video data; sending the video data from the IPTV server to client devices associated with members of the selected segment of the IPTV subscriber population; and reporting to the advertisement client a quantity of members of the targeted segment that received the targeted advertisement data. In another aspect of a particular embodiment the subscriber profile data are selected from the group consisting of behavioral data and demographic data. In another aspect of a particular embodiment reporting further comprises reporting to the advertisement client how many members of the targeted segment watched the entire targeted advertisement data in full without switching IPTV channels. In another aspect of a particular embodiment reporting further includes reporting to the advertisement client a quantity of members of the targeted segment that received the targeted advertisement data and a time during the targeted advertisement data delivery at which an IPTV channel switch occurred. In another aspect of a particular embodiment reporting further includes reporting to the advertisement client how many members of the targeted segment received the targeted advertisement data in a home zone and how many members of the IPTV targeted segment received the targeted advertisement data in a travel zone.

In another aspect of a particular embodiment the method further includes billing the advertisement client based on a quantity selected from the group consisting of a quantity indicating how many members of the targeted segment received the targeted advertisement data, a quantity indicating how many members of the targeted segment received the targeted advertisement data in a home zone, a quantity indicating how many members of the targeted segment received the targeted advertisement data in a travel zone, a quantity indicating how many members of the targeted segment watched the entire targeted advertisement data in the home zone and a quantity indicating how many members of the targeted segment watched the entire targeted advertisement in the travel zone. In another aspect of a particular embodiment the profile data includes programs being watched, the length of time watched and time of day watched, advertisement received, advertisement watched, data recorded to a Digital Video Recorder (DVR), times of the occurrence of switching channels, data collected related to website viewing behaviors, emails, electronic purchases over the internet, text messaging and telephone calls. In another aspect of a particular embodiment the advertising data is provided from an advertising server located at a super head end and the advertising data is inserted into the video data at a regional head end. In another aspect of a particular embodiment the billing quantity is calculated at a regional head end and sent to a traffic billing server at a super head end for billing.

In another particular embodiment a system for distributing advertisement in an internet protocol television (IPTV) system is disclosed. The system includes a processor in communication with memory and a computer program stored in the memory containing instructions for execution by the processor. The computer program further includes instructions to accept at an IPTV server, targeted advertisement data from an advertisement client targeting a segment selected from an IPTV subscriber population based on IPTV subscriber profile data, instructions to insert the targeted advertisement data into video data, instructions to send the video data from the IPTV server to client devices associated with members of the selected segment of the IPTV subscriber population and instructions to report to the advertisement client a quantity of members of the targeted segment that received the targeted advertisement data. In another aspect of a particular embodiment the subscriber profile data are selected from the group consisting of behavioral data and demographic data. In another aspect of a particular embodiment in the computer program, the instructions to report further includes instructions to report to the advertisement client a quantity of members of the targeted segment watched the entire targeted advertisement data in full without switching IPTV channels from the targeted advertisement data. In another aspect of a particular embodiment in the computer program, the instructions to report further includes instructions to report to the advertisement client a quantity of members of the targeted segment that received the targeted advertisement data and a time during the targeted advertisement data delivery at which an IPTV channel switch occurred. In another aspect of a particular embodiment in the computer program, the instructions to report further includes instructions to report to the advertisement client how many members of the targeted segment received the targeted advertisement data in a home zone and how many members of the IPTV targeted segment received the targeted advertisement data in a travel zone. In another aspect of a particular embodiment the computer program further includes instructions to bill the advertisement client based on a quantity selected from the group consisting of a quantity indicating how many members of the targeted segment received the targeted advertisement data, a quantity indicating how many members of the targeted segment received the targeted advertisement data in a home zone, a quantity indicating how many members of the targeted segment received the targeted advertisement data in a travel zone, a quantity indicating how many members of the targeted segment watched the entire targeted advertisement data in the home zone and a quantity indicating how many members of the targeted segment watched the entire targeted advertisement in the travel zone. In another aspect of a particular embodiment the profile data includes data indicating programs being watched, the length of time watched and time of day watched, advertisement received, advertisement watched, data recorded to a Digital Video Recorder (DVR), times of the occurrence of switching channels, data collected related to website viewing behaviors, emails, electronic purchases over the internet, text messaging and telephone calls. In another aspect of a particular embodiment the advertising data is provided from an advertising server located at a super head end and the advertising data is inserted into the video data at a regional head end. In another aspect of a particular embodiment the billing quantity is calculated at a regional head end and sent to a traffic billing server at the super head end for billing.

In another particular embodiment a computer readable medium having stored thereon a computer program for distributing advertisement in an internet protocol television (IPTV) system is disclosed. The computer program further includes instructions to accept at an IPTV server, targeted advertisement data from an advertisement client targeting a segment selected from an IPTV subscriber population based on IPTV subscriber profile data, instructions to insert the targeted advertisement data into video data, instructions to send the video data from the IPTV server to client devices associated with members of the selected segment of the IPTV subscriber population and instructions to report to the advertisement client a quantity of members of the targeted segment that received the targeted advertisement data. In another aspect of a particular embodiment the subscriber profile data are selected from the group consisting of behavioral data and demographic data. In another aspect of a particular embodiment in the computer program, the instructions to report further includes instructions to report to the advertisement client a quantity of members of the targeted segment that watched the entire targeted advertisement data in full without switching IPTV channels from the targeted advertisement data. In another aspect of a particular embodiment in the computer program, the instructions to report further includes instructions to report to the advertisement client a quantity of members of the targeted segment that received the targeted advertisement data and a time during the targeted advertisement data delivery at which an IPTV channel switch occurred. In another aspect of a particular embodiment in the computer program, the instructions to report further includes instructions to report to the advertisement client how many members of the targeted segment received the targeted advertisement data in a home zone and how many members of the IPTV targeted segment received the targeted advertisement data in a travel zone. In another aspect of a particular embodiment the computer program further includes instructions to bill the advertisement client based on a quantity selected from the group consisting of a quantity indicating how many members of the targeted segment received the targeted advertisement data, a quantity indicating how many members of the targeted segment received the targeted advertisement data in a home zone, a quantity indicating how many members of the targeted segment received the targeted advertisement data in a travel zone, a quantity indicating how many members of the targeted segment watched the entire targeted advertisement data in the home zone and a quantity indicating how many members of the targeted segment watched the entire targeted advertisement in the travel zone. In another aspect of a particular embodiment the profile data includes data indicating programs being watched, the length of time watched and time of day watched, advertisement received, advertisement watched, data recorded to a Digital Video Recorder (DVR), times of the occurrence of switching channels, data collected related to website viewing behaviors, emails, electronic purchases over the internet, text messaging and telephone calls.

In another particular embodiment a data structure in memory is disclosed. The data structure includes a client ID field for containing data indicating a client device identifier; a home zone field for containing data indicating an advertisement server for a home zone associated with the client device; a travel zone field for containing data indicating a travel zone associated with the client device; and an advertisement received field for storing data indicating which advertisements the client device received in full without switching from the advertisement for creating statistics to send to a home server associated with the home zone.

An illustrative embodiment collects viewer behavioral information that can be analyzed to look at a whole family profile of IPTV subscribers or individual IPTV subscriber profiles. The subscriber profiles ("profiles") also include but are not limited to profile data collected from subscribers during the subscription registration process. The data collected could be anything related to the IPTV video data incorporating programs being watched, the length of time watched and time of day watched, advertisement received, advertisement watched and data recorded to a Digital Video Recorder (DVR). The profiles also include times of the occurrence of switching channels so that the IPTV SP can determine if a targeted advertisement was watched, that is received without switching to another channel and if the channel is switched occurred during delivery of the targeted advertisement, the time at which the switching occurred. The switching time enables an advertisement client to determine exactly when the subscriber at a client device switched from the channel containing the targeted advertisement. The time of switching helps an advertisement client to determine when during the targeted advertisement they "lost" the viewer due to the viewer changing channels. The profile also includes behavioral data for IPTV subscribers. Behavioral data includes but is not limited to data collected related to website viewing behaviors, emails, electronic purchases over the internet, text messaging and telephone calls over the IPTV network or a related telephone data system.

For example, if a subscriber is researching buying a new television, over the internet, this information is collected and saved in the subscriber's profile. Subscriber profiles including associated STB or client device identifiers associated with the subscriber are stored in a database in the IPTV system. The IPTV network records these data in the subscriber profile of behavioral statistics for a population of IPTV subscribers. The SP presents the statistics for the IPTV population of subscribers to prospective advertisement clients who may select particular segments of the IPTV population of subscribers based on subscriber demographics and/or behavioral characteristics. The advertisement client may then target specific advertisement to segments of the IPTV subscriber population via video to client devices such as set top boxes (STBs) associated with a particular segment of the IPTV subscribers, having specific user profile characteristics including selected behavioral statistics and demographic data.

A particular illustrative embodiment enables real-time targeted advertisement based upon user identified preferences derived from the IPTV subscriber profiles containing statistics on behavior and demographic data. A user may enter profile data indicating likes and dislikes as far as interests in video programming ordered, selected and received and merchandise and services purchased. Similar targeting enables an illustrative embodiment to provided targeted screen pop-ups, video, etc. to a web viewing audience at a client device connected to the IPTV network.

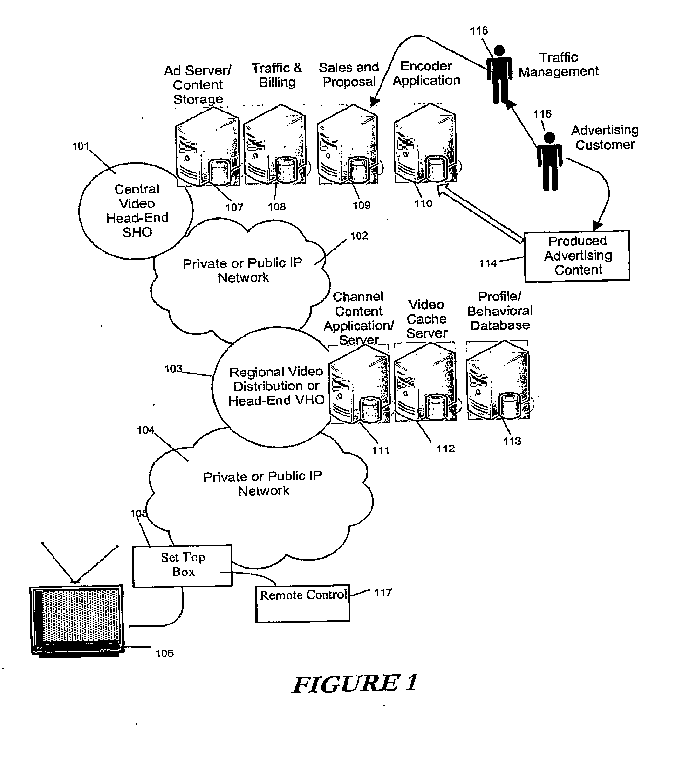

Turning now to **FIG. 1**, **FIG. 1** depicts an illustrative embodiment of an IPTV architecture to support targeted advertisement. As shown in **FIG.** 1 the central video head end or SHO **101** includes but is not limited to the ad server/content storage device **107**, the traffic and billing system **108**, sales proposal system **109**, and the encoder application **110**. The produced advertisement content **114** which is produced by the advertisement customer **115** is provided to the encoder application at the SHO. The SHO encodes the targeted advertisement content **114** and distributes the advertisement content to IPTV subscribers via the public or private IP network **102**. At the regional video distribution or head end VHO **103** the data from the central video head end SHO is distributed to individual IPTV subscribers over the public or private IP network **104**. The VHO includes but is not limited to the channel content application/server **111**, the video cache server **112**, and the profile/behavioral database **113**. The profile behavioral database **113** can be stored at the VHO or at the SHO. In an illustrative embodiment, as a user views the IPTV television **106** monitor displaying IPTV data received on a STB **105**, the IPTV system monitors the channel viewing and channel changing occurrence data as input to the STB by a subscriber via remote control (RC) **117** is collected in the subscriber profile in the IPTV profile/Behavioral Database **113**. From an Advertisement client **115** perspective the advertisement client works with the IPTV Traffic Management office **116** to purchase behavioral and demographic data based advertisement spot inventory. The Advertisement Traffic Sales and Management **116** uses the Sales and Proposal system **109** to generate service proposals, make behavioral advertisement sales, and enter the sale information into the Traffic and Billing system **108**. Thus an advertisement client may purchase an advertisement spot to target, an IPTV population segment having a particular demographic, a particular behavior and/or a particular demographic exhibiting a particular behavior.

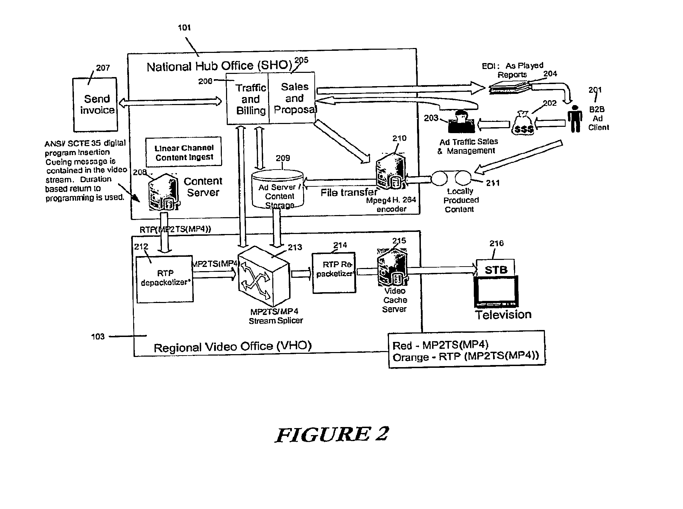

Turning now to **FIG. 2**, **FIG. 2** depicts an illustrative embodiment of an IPTV Local Advertisement insertion model. The advertisement client **201** contacts SP Sales agent to purchase local advertisement spot inventory. The advertisement client pays **202** the IPTV SP to run local advertisements as agreed upon by both parties. The advertisement traffic sales and management module **203** in the IPTV system uses the traffic and billing system to generate service proposals, make local advertisement sales, and enter the sales information into the traffic and billing system. From this the Electronic Data Inter-exchange interface from the Traffic and Billing system to the Advertisement client to send "As Run/Played" reports **204** showing when the client's advertisements were actually run. The "Sales and Proposal" system **205** is used by the Advertisement Traffic Sales and Management personal to generate local advertisement proposals and sell spot inventory to the Advertisement Client. The "Traffic and Billing" system **206** takes the information regarding what was sold in order to schedule the local advertisement insertions into the live TV programming schedule. The "Traffic and Billing" system sends the invoice to the advertisement client **201** for the service provided. The invoice **207** is mailed to the advertisement client **201**. There may also be other external systems involved with the invoicing if the service provider wants to integrate this billing information with other billing information they are sending to the same client (integrated billing).

In an illustrative embodiment, the local or home advertisement **211** is encoded in Moving Pictures Experts Group 4 (MPEG 4) or H.264 format **210**. The local advertisement data can be received from the advertisement client **201** in tape or electronic form. Live or Programmed TV content is ingested into the Content Server **208** and includes the cue tone information used to tell the Advertisement server **209** / Splice Equipment **213** when to insert the advertisement. The "Traffic and Billing" system **206** sends the Advertisement Insertion schedule to the Advertisement Server(s) **209**. The "Traffic and Billing" system **206** received information from the Advertisement servers **206** regarding the actual completion of the Advertisement Insertions. The RTP header is removed from the linear programming (live TV) content packet via the "RTP De-Packetizer" **212**. The MPEG4 / H.264 live TV content is sent on its way to the consumers TV / Set Top Box for viewing with the original commercial still in tact. The local Advertisement Insertion Stream Splicer **213** splices in the home advertisement over the original advertisement when the cue tone indicates. After splicing the RTP header is added back onto the packet via a "Re-Packetization" process **214**. The Video Cache server **215** caches the linear video content for distribution to the customer's home for viewing on their TV via their Set Top Box **216**.

An illustrative embodiment provides flexibility to see the demographics of particular behavior in the IPTV system subscriber population as well as the behavior of a particular demographic in the IPTV subscriber population. The National Hub Office **101** (SHO) can be a single office location that consists of satellite acquisition, receive capabilities, base-band signal processing/switching/redundancy, encoding, and video on demand (VoD) acquisition/ingest facilities. This location provides all linear stream multicast signals and unicast VoD for the entire IPTV network. The Regional Hub Offices **103** are multiple office locations consist of off-air antenna and receive equipment, base-band signal processing/switching/redundancy, encoding, and VoD customer facing servers. The regional hub offices provide all off-air local multicast signals (joined with linear regional hub office signals).

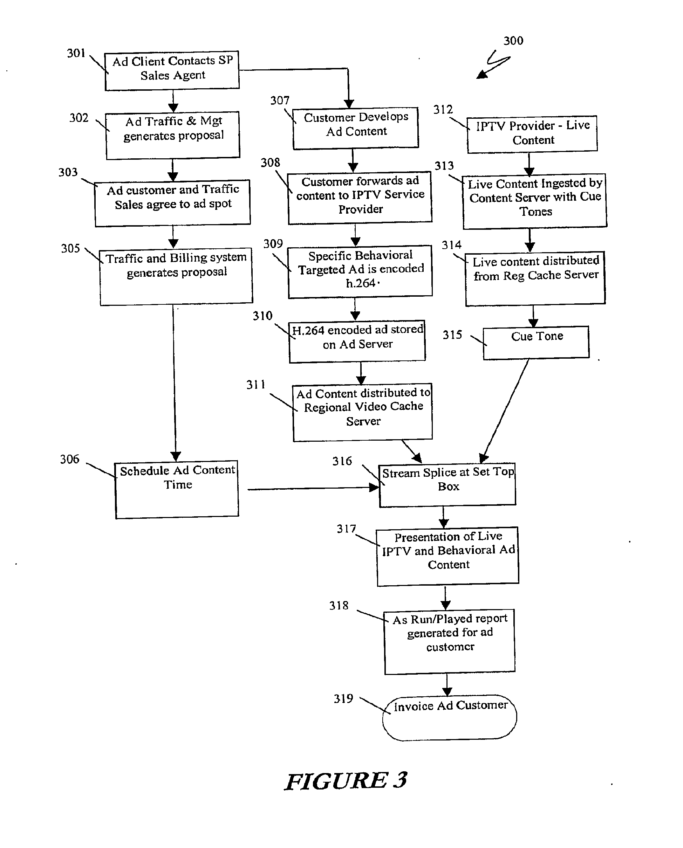

Turning now to **FIG. 3** in an illustrative embodiment at block **301** an advertisement client contacts a service provider sales agent. At block **302** the advertisement traffic and management department for the IPTV service provider generate a proposal for an advertisement spot. At block **303** the advertisement client selects a segment of the IPTV subscriber population based on behavioral characteristics and/or demographic characteristics to be targeted by the advertisement spot.

The advertisement customer and the traffic sales department of the IPTV service provider agree to an advertisement spot targeting the selected segment of the IPTV subscriber population. The advertisement client may target a particular segment of the IPTV subscriber population based on behavioral data such as program watching, purchasing of certain types of goods or services and time of day watching or based on demographics such as languages spoken, age, gender and geographic location. At block **305** the traffic and billing department at the IPTV service provider generates a proposal and forwards it to the IPTV schedule advertisement and content time system. At this point the advertisement spot has been selected to target a particular demographic or behavioral characteristic of the IPTV subscriber population and schedules to be inserted and delivered to client identifiers associated with the targeted segment at a particular time. The advertisement client customer develops the advertisement content at block **307**. The advertisement content is developed in accordance with the targeted segment of the IPTV subscriber population so that the advertisement content is appealing to the targeted segment. At block **308** the advertisement customer forwards the advertisement content to the IPTV service provider. At block **309** the specific behavioral targeted advertisement is encoded in H.264 format and at block **310** the H.264 encoded advertisement is stored on an advertisement server in the IPTV system. At block **311** the advertisement content is distributed to a regional VHO cache server and is now ready to be spliced into video delivered to the set top box at block **316**.

At block **312** the IPTV service provider provides live content or stored programming. At block **313** video content data are adjusted by content server and cue tones inserted for the insertion of the advertisements data down stream. At block **314** the video content data is distributed from a regional cache server and a cue tone generated at block **315**. At block **316** the targeted advertisement data is spliced into video data delivered to the set top box. The targeted advertisement data can also be delivered to the set top box and inserted into video data delivered to the set top box at the set top box or the targeted advertisement data can be spliced into the video prior to delivery to the set top box. At block **317** the video with the advertisement inserted are viewed at the display associated with the set top box or other client device.

At block **318** the IPTV system monitors the deliver of the targeted advertisement data and the switching activity during deliver of the advertisement and generates an as run/played report for the advertisement customer. The advertisement "as run/played" report can include the success of the advertisement, that is the number of subscribers in the IPTV population that received the targeted advertisement, the number of subscribers in the targeted IPTV population segment that received the targeted advertisement, the number of subscribers in each of the population and the segment selected from the total population that received the targeted advertisement and did not switch channels during delivery of the targeted advertisement, and the time at which subscribers did switch from the targeted advertisement data when the targeted advertisement data was received by the subscribers.

At block **319** an invoice is generated billing the advertisement customer based on the success of the advertisement as shown in the as run/played report. The invoice to the advertisement client can be based on the success of the advertisement, that is, how many subscribers received the targeted advertisement data, how many subscribers received the target advertisement data in a selected segment of the IPTV subscriber population which was targeted to receive the advertisement data, and how many targeted subscribers received the advertisement data in full without changing the channel.

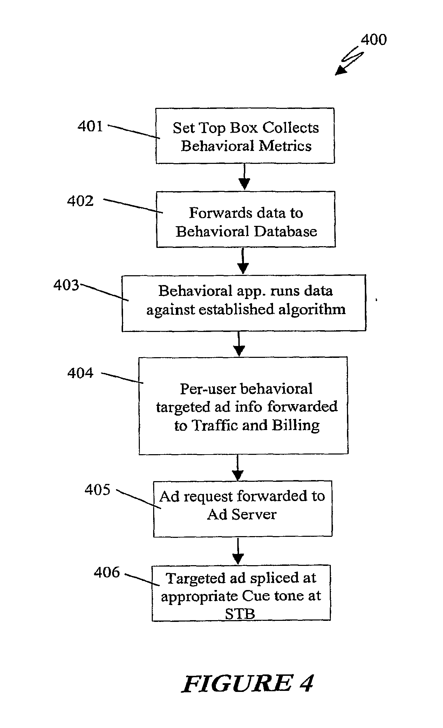

Turning now to **FIG. 4, FIG. 4** illustrates the process flow for collection of subscriber behavior for use in determination of type of advertisement to be displayed to the subscriber. The STB or another client device associated with a subscriber collects the user viewing and behavioral data at **401**. The client device/STB also collects any web or other types of use activity through the STB. This data would be forwarded to the profile/Behavioral Database at **402**. The raw behavioral and profile data is processed at **403** and metrics or a request for specific targeted advertisement content is sent to the Traffic and Billing application at **404**. The targeted advertisement data is then sent to the Advertisement Server at **405**. The targeted advertisement data is then spliced and sent to the STB or another client device associated with the subscriber.

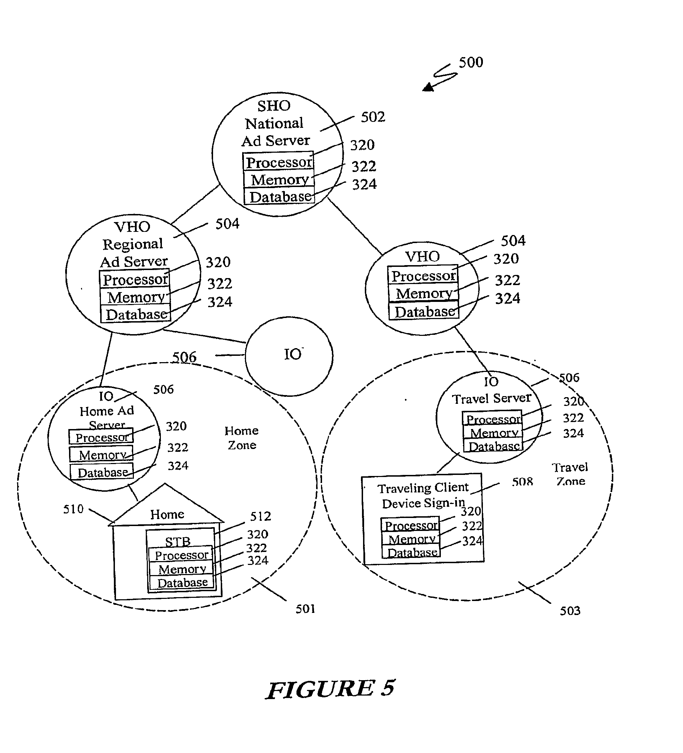

Turning now to **FIG. 5** in an illustrative embodiment a home zone **501** associated with a home advertisement server **506** and a travel zone **503** associated with a traveling client device and travel server **506** are illustrated. In an illustrative embodiment a traveling client device **508** in a travel zone **503** issues a request to a travel server **506** to receive home advertisement from the home advertisement server **506** in the home zone **501**. The home advertisement server can be associated with the home location for a particular client and may be located in either an intermediate office (IO) **506**, a VHO regional server **504** or a national server SHO **502**. Thus the advertisement server may be located in either, the SHO, VHO or IO and contain home advertisement content related to a registration address for set top box in an IPTV system. Home advertisement server **506** may be distributed logically and/or physically between the IO, VHO and SHO and may contain national, regional and local advertisements which are destined for residents in a home zone **501** or for traveling client devices in a travel zone. When a traveling client device sign-in **508** signs in to a travel server **506** the identity of the traveling client is tied back to an IPTV system subscriber database **324** in an IPTV server (SHO, VHO or IO) and identifies the traveling client by a log-on ID or MAC address for a client device utilized in signing on to the IPTV. system. This identity for the traveling client is tied to an IPTV registration database **324** which can be kept in the SHO, VHO or IO. The registration database includes profiles for a subscriber such as the home address or registration address for the set top box in home **510**. As shown in **FIG. 5** each set top box, IO, VHO and SHO and traveling client include a processor **320**, memory **322**, and database **324**.

When a request is received from a traveling client at a travel server the IPTV system searches for a home advertisement server containing advertisements associated with the traveling client device's registered home address. These home advertisements are collected and served from the home advertisement server to the traveling server in unicast. If more than a predetermined threshold number of traveling client devices has requested the same home advertisement server content through the same travel server then the home advertisement server content is multicast to a multiplicity of traveling client devices who requested home advertisement from a particular travel server 506. Likewise if a plurality of travel servers are served by a particular VHO and are requesting the same home advertisement content then the home advertisement content can be unicast from the home advertisement server located at the IO, VHO or SHO to the travel server(s) associated with the traveling client devices. The requesting home servers may then unicast or multicast the home advertisement content to the requesting traveling client devices. The home advertisement content is multicast from a travel server whenever a predetermined threshold number of traveling client devices, for example, two traveling client devices have requested the same home advertisement content in the same travel zone. The predetermined threshold can be selected based on network load conditions and available bandwidth or other conditions selected by the IPTV service provider.

In an illustrative embodiment a service provider collects behavioral data, statistics and advertisement watching statistics from the client devices. An advertisement client can view these statistics in or along with a subscriber profile to see the demographic data of the subscriber population and the associated viewing habit for the subscriber demographics. An advertisement client can purchase a selection target from the statistics to target a particular demographic population. The advertisement client then provides an advertisement it deems suitable for the targeted demographic population selected from the SP behavioral and demographics statistics. The service provider will then send the advertisement to the targeted demographic group as selected by the advertisement client. The advertisements might be targeted as exclusively only to the demographic population selected by the advertisement client or may include nonexclusive constraints in sending the advertisement to the subscribers.

The service provider reports which advertisements were watched and by whom as well as which advertisements were watched in full. Advertisements are deemed as "watched in full" when the advertisement is received at a client device without changing the channel or IP address during the advertisement. Advertisements that are not watched in full are those advertisements that resulted in changing of the channel during delivering the advertisement to the client device. Thus the SP can report the success of the advertisement (i.e., quantity of advertisements delivered to client devices, quantity of advertisements delivered to targeted client devices, advertisements watched in full, etc.) with the targeted group that is how many of the targeted demographic group actually received the advertisement and how many of the targeted demographic group actually watched the advertisement in full. The advertisement client may agree with the service provider to pay based on the success of the advertisement. In an illustrative embodiment the IPTV system keeps track of how many traveling subscribers receive targeted advertisements and how many traveling subscribers receive the targeted advertisement in full.

The success of the advertisement can be defined as the number of hits (quantity of targeted devices receiving the advertisement) in the targeted demographic in combination with the number of hits (quantity of targeted devices receiving the advertisement in full without switching IP addresses or channels) in the targeted demographic area which resulted in the commercial being watched fully, that is without being switched during the commercial. These success measurements and targeted advertisements apply to traveling client devices associated with IPTV system subscribers within a particular demographic. Thus the success of an advertisement can include those traveling client devices associated with IPTV subscribers in the database who are within the targeted demographic. A traveling client device associated with a targeted subscriber may receive targeted advertisement from their home zone while outside of the home zone in a travel zone and these statistics will be reported by the service provider and billed to the advertisement client based on the success of the advertisements provided to those subscribers in the demographic targeted by the ad client.

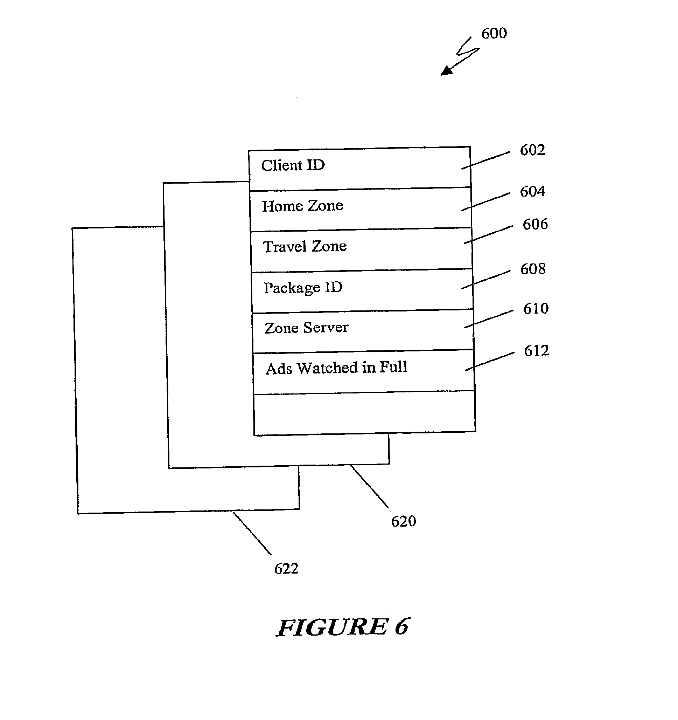

Turning now to **FIG. 6** a data structure utilized in an illustrative embodiment is depicted. As shown in **FIG. 6** the data structure **600** contains a client ID field **602**, a home zone field **604**, a travel zone field **606**, package ID field **608**, a zone server field **610** and advertisements watched in full field **612**. Multiple data structures for multiple different client devices **620** and **622** may also be stored in memory for correlating between or matching client ID having the same home zone and the same travel zone for delivering content to the client devices identified by the client ID while traveling.

The client ID field contains data indicating a client device identity which is associated with a particular subscriber and a particular subscriber profile in the IPTV network data base. The home zone field contains data indicating an advertisement server for a home zone associated with the client device. The travel zone field contains data indicating a travel zone associated with the client device.

The package identifier field contains data for indicating an IPTV package for the client device for determining a quantity of advertisements to send to the client device. Different levels of advertisement can be sent. A credit toward the purchase of IPTV service is adjusted for advertisements watched by a user at a client device. The more advertisements a client device receives and watches in full, the more credit it receives toward pay for IPTV service. An advertisement is deemed watched in full when a client device receives the advertisement inserted into content without switching to another IP address during reception of the advertisement. The switching/not switching during advertisements is monitored by the client device or the travel server and stored in the data structure. The advertisements received field stores data indicating which advertisements the client device has received in full without switching from the targeted advertisement data for creating statistics to send to a home IPTV server associated with the home zone.

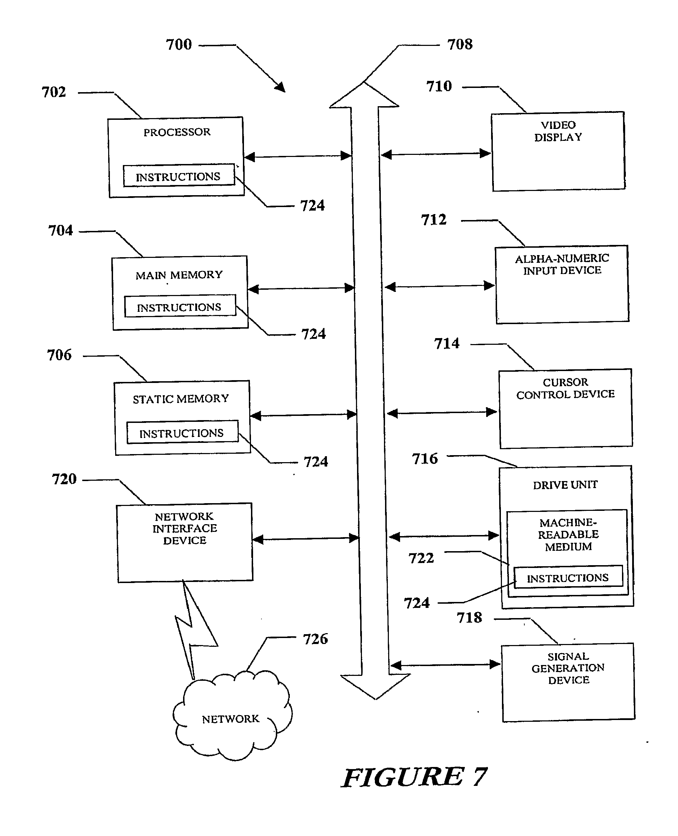

Turning now to **FIG. 7, FIG. 7** is a diagrammatic representation of a machine in the form of a computer system **700** within which a set of instructions, when executed, may cause the machine to perform any one or more of the methodologies discussed herein. In some embodiments, the machine operates as a standalone device. In some embodiments, the machine may be connected (e.g., using a network) to other machines. In a networked deployment, the machine may operate in the capacity of a server or a client user machine in server-client user network environment, or as a peer machine in a peer-to-peer (or distributed) network environment. The machine may comprise a server computer, a client user computer, a personal computer (PC), a tablet PC, a set-top box (STB), a Personal Digital Assistant (PDA), a cellular telephone, a mobile device, a palmtop computer, a laptop computer, a desktop computer, a personal digital assistant, a communications device, a wireless telephone, a land-line telephone, a control system, a camera, a scanner, a facsimile machine, a printer, a pager, a personal trusted device, a web appliance, a network router, switch or bridge, or any machine capable of executing a set of instructions (sequential or otherwise) that specify actions to be taken by that machine. It will be understood that a device of the present invention includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system **700** may include a processor **702** (e.g., a central processing unit (CPU), a graphics processing unit (GPU), or both), a main memory **704** and a static memory **706**, which communicate with each other via a bus **708**. The computer system **700** may further include a video display unit **710** (e.g., a liquid crystal display (LCD), a flat panel, a solid state display, or a cathode ray tube (CRT)). The computer system **700** may include an input device **712** (e.g., a keyboard), a cursor control device **714** (e.g., a mouse), a disk drive unit **716**, a signal generation device **718** (e.g., a speaker or remote control) and a network interface device **720**.

The disk drive unit **716** may include a machine-readable medium **722** on which is stored one or more sets of instructions (e.g., software **724**) embodying any one or more of the methodologies or functions described herein, including those methods illustrated in herein above. The instructions **724** may also reside, completely or at least partially, within the main memory **704**, the static memory **707**, and/or within the processor **702** during execution thereof by the computer system **700**. The main memory **704** and the processor **702** also may constitute machine-readable media. Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present invention, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

The present invention contemplates a machine readable medium containing instructions **724**, or that which receives and executes instructions **724** from a propagated signal so that a device connected to a network environment **726** can send or receive voice, video or data, and to communicate over the network **726** using the instructions **724**. The instructions **724** may further be transmitted or received over a network **726** via the network interface device **720**.

While the machine-readable medium **722** is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention. The term "machine-readable medium" shall accordingly be taken to include, but not be limited to: solid-state memories such as a memory card or other package that houses one or more read-only (non-volatile) memories, random access memories, or other re-writable (volatile) memories; magneto-optical or optical medium such as a disk or tape; and carrier wave signals such as a signal embodying computer instructions in a transmission medium; and/or a digital file attachment to e-mail or other self-contained information archive or set of archives is considered a distribution medium equivalent to a tangible storage medium. Accordingly, the invention is considered to include any one or more of a machine-readable medium or a distribution medium, as listed herein and including art-recognized equivalents and successor media, in which the software implementations herein are stored.

Although the present specification describes components and functions implemented in the embodiments with reference to particular standards and protocols, the illustrative embodiment is not limited to such standards and protocols. Each of the standards for Internet and other packet switched network transmission (e.g., TCP/IP, UDP/IP, HTML, and HTTP) represent examples of the state of the art. Such standards are periodically superseded by faster or more efficient equivalents having essentially the same functions. Accordingly, replacement standards and protocols having the same functions are considered equivalents.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are merely representational and may not be drawn to scale. Certain proportions thereof may be exaggerated, while others may be minimized. Accordingly, the specification and drawings are to be regarded in an illustrative rather than a restrictive sense.

Rather, as the following claims reflect, inventive subject matter lies in less than all features of a single disclosed embodiment. Thus the following claims are hereby incorporated into the Detailed Description, with each claim standing on its own as a separate embodiment.

Although the illustrative embodiment has been described with reference to several illustrative embodiments, it is understood that the words that have been used are words of description and illustration, rather than words of limitation. Changes may be made within the purview of the appended claims, as presently stated and as amended, without departing from the scope of the illustrative embodiment in its aspects. Although the illustrative embodiment has been described with reference to particular means, materials and embodiments, the invention is not intended to be limited to the particulars disclosed; rather, the invention extends to all functionally equivalent structures, methods, and uses such as are within the scope of the appended claims.

In accordance with various embodiments of the present illustrative embodiment, the methods described herein are intended for operation as software programs running on a computer processor. Dedicated hardware implementations including, but not limited to, application specific integrated circuits, programmable logic arrays and other hardware devices can likewise be constructed to implement the methods described herein. Furthermore, alternative software implementations including, but not limited to, distributed processing or component/object distributed processing, parallel processing, or virtual machine processing can also be constructed to implement the methods descried herein.

## Claims

1. A method for distributing home targeted advertisement data in an internet protocol television (IPTV) system (500), comprising:
accepting at an IPTV home zone server (501, 506), the home targeted advertisement data from an advertisement client directed to a targeted segment in a home zone (501) selected from an IPTV subscriber population based on IPTV subscriber profile data;
inserting the home targeted advertisement data into home video data at the IPTV home zone server (501, 506);
sending the home video data from the IPTV home zone server (501. 506) to client devices (512) associated with members of the selected segment in the home zone (501) of the IPTV subscriber population;
the method **characterised by**:
receiving at the IPTV travel zone server (503, 506), a request from a client device (508) for home advertising data;
determining, based on a home registration address for the client device (508), that the client device (508) is in a travel zone (503) served by an IPTV travel zone server (503, 506):
sending the home advertising data from the IPTV home zone server (501, 506) to the IPTV travel zone server (503, 506) in the travel zone (503);
inserting the home targeted advertisement into travel video at the IPTV travel zone server (503, 506) for the travel zone (503) containing the client device (508) registered in the home zone (501);
sending from the IPTV travel zone server (503, 506), the travel video data with the home targeted advertisement data to the client device (508) in the travel zone (501); and
reporting to the advertisement client a quantity of members of the targeted segment that received the home targeted advertisement data in the home zone (501) from the IPTV home zone server (501, 506) and how many members of the targeted segment received the home targeted advertisement in the travel zone (503) from the IPTV travel zone server (503, 506).

2. The method of claim 1, wherein the subscriber profile data are selected from the group consisting of behavioral data and demographic data.

3. The method of claim 1, wherein reporting further comprises reporting to the advertisement client how many members of the targeted segment watched the targeted advertisement data without switching IPTV channels.

4. The method of claim 1, wherein reporting further comprises reporting to the advertisement client a quantity of members of the targeted segment that received the targeted advertisement data and a time during the targeted advertisement data delivery at which an IPTV channel switch occurred.

5. The method of claim 1, wherein the home server sends the home advertisement in unicast to the travel server when a number of travel client devices is below a threshold number of requesting travel client devices and the home server sends the home advertisement in multicast to the travel server when a number of requesting travel client devices is equal to or above the threshold number of requesting travel client devices.

6. The method of claim 1, wherein the profile data comprises programs being watched, the length of time watched and time of day watched, advertisement received, advertisement watched, data recorded to a Digital Video Recorder (DVR), times of the occurrence of switching channels, data collected related to website viewing behaviors, emails, electronic purchases over the internet, text messaging and telephone calls.

7. The method of claim 1, wherein the advertising data is provided from an advertising server located at a super head end and the advertising data is inserted into the video data at a regional head end.

8. A system for distributing advertisement in an internet protocol television (IPTV) system, comprising:
a processor (320) in communication with memory (322); and
a computer program stored in the memory (322) containing instructions for execution by the processor (320), the computer program further comprising:
instructions to accept at an IPTV home zone server (501, 506), the home targeted advertisement data from an advertisement client directed to a targeted segment in a home zone (501) selected from an IPTV subscriber population based on IPTV subscriber profile data;
instructions to insert the home targeted advertisement data into home video data at the IPTV home zone server (501, 506);
instructions to send the home video data from the IPTV home zone server (501, 506) to client devices (508) associated with members of the selected segment in the home zone (501) of the IPTV subscriber population;
the system **characterised by** the computer program further comprising:
instructions to receive at the IPTV travel zone server (503, 506), a request from a client device (508) for home advertising data;
instructions to determine, based on a home registration address for the client device (508) that the client device (508) is in a travel zone (503) served by an IPTV travel zone server (503, 506);
instructions to send the home advertising data from the IPTV home zone server (501, 506) to the IPTV travel zone server (503, 506) in the travel zone (503);
instructions to insert the home targeted advertisement into travel video at an IPTV travel zone server (503, 506) for the travel zone (503) containing the client device (508) registered in the home zone (501);
instructions to send from the IPTV travel zone server (503, 506), the travel video data with the home targeted advertisement data to the client device (508) in the travel zone (503); and
instructions to report to the advertisement client a quantity of members of the targeted segment that received the home targeted advertisement data in the home zone (501) from the IPTV home zone server (501, 506) and how many members of the targeted segment received the home targeted advertisement in the travel zone (503) from the IPTV travel zone server (503, 506).

9. The system of claim 8, wherein in the computer program, the instructions to report further comprise instructions to report to the advertisement client a quantity of members of the targeted segment watched the entire targeted advertisement data in full without switching IPTV channels from the targeted advertisement data.

10. The system of claim 8, wherein in the computer program, the instructions to report further comprise instructions to report to the advertisement client a quantity of members of the targeted segment that received the targeted advertisement data and a time during the targeted advertisement data delivery at which an IPTV channel switch

11. The system of claim 8, the computer program further comprising instructions to send the home advertisement in unicast to the travel server when a number of requesting travel client devices is below a threshold number of requesting travel client devices and the home server sends the home advertisement in multicast to the travel server when a number of requesting travel client devices is equal to or above the threshold number of requesting travel client devices.

12. The system of claim 8, wherein the profile data comprises data indicating programs being watched, the length of time watched and time of day watched, advertisement received, advertisement watched, data recorded to a Digital Video Recorder (DVR) times of the occurrence of switching channels, data collected related to website viewing behaviors, emails, electronic purchases over the internet, text messaging and telephone call.

13. The system of claim 8, wherein an advertising server is located at a super head end for providing the advertising data and the advertising data is inserted into the video data at a regional head end.

14. A computer readable medium having stored thereon a computer program for carrying out the method of any of claims 1 to 7.

## Patentansprüche

1. Verfahren zum Verteilen von heimfokussierten Werbedaten in einem Internetprotokollfernseh-(IPTV-)System (500), umfassend:
in einem IPTV-Heimatzonenserver (501, 506) von einem Werbekunden erfolgendes Entgegennehmen der heimfokussierten Werbedaten, die auf ein anvisiertes Segment in einer Heimatzone (501) gerichtet sind, die auf der Grundlage von IPTV-Teilnehmerprofildaten aus einer IPTV-Teilnehmerpopulation ausgewählt wird;
im IPTV-Heimatzonenserver (501, 506) erfolgendes Einfügen der heimfokussierten Werbedaten in Heimvideodaten;
Senden der Heimvideodaten vom IPTV-Heimatzonenserver (501, 506) an Clientgeräte (512), die Mitgliedern des ausgewählten Segments in der Heimatzone (501) der IPTV-Teilnehmerpopulation zugeordnet sind;
wobei das Verfahren **gekennzeichnet ist durch**:
im IPTV-Reisezonenserver (503, 506) erfolgendes Empfangen einer Anforderung von Heimwerbedaten von einem Clientgerät (508);
auf einer Heimregistrierungsadresse für das Clientgerät (508) beruhendes Bestimmen, dass das Clientgerät (508) in einer **durch** einen IPTV-Reisezonenserver (503, 506) versorgten Reisezone (503) ist;
Senden der Heimwerbedaten vom IPTV-Heimatzonenserver (501, 506) an den IPTV-Reisezonenserver (503, 506) in der Reisezone (503);
Einfügen der heimfokussierten Anzeige in Reisevideo im IPTV-Reisezonenserver (503, 506) für die Reisezone (503), die das in der Heimatzone (501) registrierte Clientgerät (508) enthält;
Senden der Reisevideodaten mit den heimfokussierten Werbedaten vom IPTV-Reisezonenserver (503, 506) an das Clientgerät (508) in der Reisezone (501); und
an den Werbekunden erfolgendes Melden einer Quantität von Mitgliedern des anvisierten Segments, welche die heimfokussierten Werbedaten in der Heimatzone (501) vom IPTV-Heimatzonenserver (501, 506) empfangen haben, und wie viele Mitgliedern des anvisierten Segments die heimfokussierten Werbedaten in der Reisezone (503) vom IPTV-Reisezonenserver (503, 506) empfangen haben.

2. Verfahren nach Anspruch 1, worin die Teilnehmerprofildaten aus der Gruppe ausgewählt werden, die aus Verhaltensdaten und demografischen Daten besteht.

3. Verfahren nach Anspruch 1, worin das Melden ferner umfasst: Melden an den Werbekunden, wie viele Mitglieder des anvisierten Segments die fokussierten Werbedaten angesehen haben, ohne IPTV-Kanäle zu wechseln.

4. Verfahren nach Anspruch 1, worin das Melden ferner umfasst: an den Werbekunden erfolgendes Melden einer Quantität von Mitgliedern des anvisierten Segments, welche die fokussierten Werbedaten empfangen haben, und eines Zeitpunkts während der Zustellung der fokussierten Werbedaten, zu dem ein IPTV-Kanalwechsel stattfand.

5. Verfahren nach Anspruch 1, worin der Heimserver die Heimwerbung als Direktsendung an den Reiseserver sendet, wenn eine Anzahl von Reise-Clientgeräten unterhalb eines Schwellwerts von anfordernden Reise-Clientgeräten liegt, und der Heimserver die Heimwerbung als Gruppensendung an den Reiseserver sendet, wenn eine Anzahl von anfordernden Reise-Clientgeräten gleich einem oder höher als ein Schwellwert von anfordernden Reise-Clientgeräten ist.

6. Verfahren nach Anspruch 1, worin die Profildaten umfassen: Angesehene Programme, die Dauer des Ansehens und die Tageszeit des Ansehens, empfangene Werbung, angesehene Werbung, in einem Videorekorder (DVR) aufgezeichnete Daten, Zeitpunkte des Stattfindens eines Kanalwechsels, gesammelte Daten bezüglich des Website-Ansehverhaltens, E-Mails, elektronische Einkäufe über das Internet, Textnachrichten und Telefonanrufe.

7. Verfahren nach Anspruch 1, worin die Werbedaten von einem Werbeserver bereitgestellt werden, der an einer Super-Kopfstelle angeordnet ist, und die Werbedaten in einer regionalen Kopfstelle in die Videodaten eingefügt werden.

8. System zum Verteilen von Werbung in einem Internetprotokollfernseh-(IPTV-)System, umfassend:
einen Prozessor (320) in Kommunikation mit einem Speicher (322); und
ein in dem Speicher (322) gespeichertes Computerprogramm, das Anweisungen zur Ausführung durch den Prozessor (320) enthält, wobei das Computerprogramm ferner umfasst:
Anweisungen, um in einem IPTV-Heimatzonenserver (501, 506) von einem Werbekunden die heimfokussierten Werbedaten entgegenzunehmen, die auf ein anvisiertes Segment in einer Heimatzone (501) gerichtet sind, die auf der Grundlage von IPTV-Teilnehmerprofildaten aus einer IPTV-Teilnehmerpopulation ausgewählt wird;
Anweisungen, um im IPTV-Heimatzonenserver (501, 506) die heimfokussierten Werbedaten in Heimvideodaten einzufügen;
Anweisungen, um die Heimvideodaten vom IPTV-Heimatzonenserver (501, 506) an Clientgeräte (508) zu senden, die Mitgliedern des ausgewählten Segments in der Heimatzone (501) der IPTV-Teilnehmerpopulation zugeordnet sind;
wobei das System **dadurch gekennzeichnet ist, dass** das Computerprogramm ferner umfasst:
Anweisungen, um im IPTV-Reisezonenserver (503, 506) eine Anforderung von Heimwerbedaten von einem Clientgerät (508) zu empfangen;
Anweisungen, um auf der Grundlage einer Heimregistrierungsadresse für das Clientgerät (508) zu bestimmen, dass das Clientgerät (508) in einer durch einen IPTV-Reisezonenserver (503, 506) versorgten Reisezone (503) ist;
Anweisungen, um die Heimwerbedaten vom IPTV-Heimatzonenserver (501, 506) an den IPTV-Reisezonenserver (503, 506) in der Reisezone (503) zu senden;
Anweisungen, um im IPTV-Reisezonenserver (503, 506) für die Reisezone (503), die das in der Heimatzone (501) registrierte Clientgerät (508) enthält, die heimfokussierte Anzeige in Reisevideo einzufügen;
Anweisungen, um die Reisevideodaten mit den heimfokussierten Werbedaten vom IPTV-Reisezonenserver (503, 506) an das Clientgerät (508) in der Reisezone (503) zu senden; und
Anweisungen, um an den Werbekunden eine Quantität von Mitgliedern des anvisierten Segments, welche die heimfokussierten Werbedaten in der Heimatzone (501) vom IPTV-Heimatzonenserver (501, 506) empfangen haben, und wie viele Mitgliedern des anvisierten Segments die heimfokussierten Werbedaten in der Reisezone (503) vom IPTV-Reisezonenserver (503, 506) empfangen haben, zu melden.

9. System nach Anspruch 8, worin in dem Computerprogramm die Anweisungen zum Melden ferner umfassen: Anweisungen, um an den Werbekunden zu melden, wie viele Mitglieder des anvisierten Segments die gesamten fokussierten Werbedaten in Voll angesehen haben, ohne IPTV-Kanäle zu wechseln.

10. System nach Anspruch 8, worin in dem Computerprogramm die Anweisungen zum Melden ferner umfassen: Anweisungen, um an den Werbekunden eine Quantität von Mitgliedern des anvisierten Segments, welche die fokussierten Werbedaten empfangen haben, und eines Zeitpunkts während der Zustellung der fokussierten Werbedaten, zu dem ein IPTV-Kanalwechsel stattfand, zu melden.

11. System nach Anspruch 8, worin das Computerprogramm ferner Anweisungen umfasst, um die Heimwerbung als Direktsendung an den Reiseserver sendet, wenn eine Anzahl von Reise-Clientgeräten unterhalb eines Schwellwerts von anfordernden Reise-Clientgeräten liegt, und der Heimserver die Heimwerbung als Gruppensendung an den Reiseserver sendet, wenn eine Anzahl von anfordernden Reise-Clientgeräten gleich einem oder höher als ein Schwellwert von anfordernden Reise-Clientgeräten ist.

12. System nach Anspruch 8, worin die Profildaten Daten umfassen, welche angeben: Angesehene Programme, die Dauer des Ansehens und die Tageszeit des Ansehens, empfangene Werbung, angesehene Werbung, in einem Videorekorder (DVR) aufgezeichnete Daten, Zeitpunkte des Stattfindens eines Kanalwechsels, gesammelte Daten bezüglich des Website-Ansehverhaltens, E-Mails, elektronische Einkäufe über das Internet, Textnachrichten und Telefonanrufe.

13. System nach Anspruch 8, worin ein Werbeserver zum Bereitstellen der Werbedaten an einer Super-Kopfstelle angeordnet ist und die Werbedaten in einer regionalen Kopfstelle in die Videodaten eingefügt werden.

14. Computerlesbares Medium, auf dem ein Computerprogramm zum Ausführen des Verfahrens nach einem der Ansprüche 1 bis 7 gespeichert ist.

## Revendications

1. Procédé de distribution de données de publicité ciblée domestique dans un système de télévision sur protocole Internet (IPTV) (500), consistant à :
accepter, au niveau d'un serveur de zone résidentielle IPTV (501, 506), les données de publicité ciblée domestique en provenance d'un client annonceur, destinées à un segment ciblé, au sein d'une zone résidentielle (501), sélectionné à partir d'une population d'abonnés IPTV sur la base de données de profils d'abonnés IPTV ;
introduire les données de publicité ciblée domestique dans des données de vidéo domestique au niveau du serveur de zone résidentielle IPTV (501, 506) ;
envoyer les données de vidéo domestique, du serveur de zone résidentielle IPTV (501, 506) à des dispositifs clients (512) associés à des membres du segment sélectionné dans la zone résidentielle (501) de la population d'abonnés IPTV ;
le procédé étant **caractérisé en ce qu'**il consiste à :
recevoir, au niveau du serveur de zone d'itinérance IPTV (503, 506), une demande en provenance d'un dispositif client (508) concernant des données de publicité domestique ;
déterminer, sur la base d'une adresse d'enregistrement domestique pour le dispositif client (508), que le dispositif client (508) se situe dans une zone d'itinérance (503) desservie par un serveur de zone d'itinérance IPTV (503, 506) ;
envoyer les données de publicité domestique, du serveur de zone résidentielle IPTV (501, 506) au serveur de zone d'itinérance IPTV (503, 506) au sein de la zone d'itinérance (503) ;
introduire les données de publicité ciblée domestique dans des données de vidéo d'itinérance, au niveau du serveur de zone d'itinérance IPTV (503, 506) pour la zone d'itinérance (503) contenant le dispositif client (508) enregistré au sein de la zone résidentielle (501) ;
envoyer, à partir du serveur de zone d'itinérance IPTV (503, 506), les données de vidéo d'itinérance, avec les données de publicité ciblée domestique, au dispositif client (508) au sein de la zone d'itinérance (501) ; et
signaler, au client annonceur, une quantité de membres du segment ciblé ayant reçu les données de publicité ciblée domestique au sein de la zone résidentielle (501) à partir du serveur de zone résidentielle IPTV (501, 506), ainsi que le nombre de membres du segment ciblé ayant reçu la publicité ciblée domestique au sein de la zone d'itinérance (503) à partir du serveur de zone d'itinérance IPTV (503, 506).

2. Procédé selon la revendication 1, dans lequel les données de profils d'abonnés sont sélectionnées à partir du groupe comportant des données comportementales et des données démographiques.

3. Procédé selon la revendication 1, dans lequel le signalement consiste en outre à signaler au client annonceur le nombre de membres du segment ciblé ayant consulté les données de publicité ciblée sans changer de canaux IPTV.

4. Procédé selon la revendication 1, dans lequel le signalement consiste en outre à signaler au client annonceur une quantité de membres du segment ciblé ayant reçu les données de publicité ciblée, ainsi qu'un instant au cours de la distribution de données de publicité ciblée au cours duquel un changement de canal IPTV a été rencontré.

5. Procédé selon la revendication 1, dans lequel le serveur résidentiel envoie la publicité domestique en monodiffusion au serveur d'itinérance lorsqu'un nombre de dispositifs clients d'itinérance est inférieur à un nombre seuil de dispositifs clients d'itinérance demandeurs, et le serveur résidentiel envoie la publicité domestique en multidiffusion au serveur d'itinérance lorsqu'un nombre de dispositifs clients d'itinérance demandeurs est égal ou supérieur au nombre seuil de dispositifs clients d'itinérance demandeurs.

6. Procédé selon la revendication 1, dans lequel les données de profils comportent les programmes qui sont regardés, le temps passé à les regarder, et l'heure de la journée à laquelle ils sont regardés, la publicité reçue, la publicité regardée, des données enregistrées sur un enregistreur vidéo numérique (DVR), les instants d'occurrence de changement de canaux, des données recueillies connexes à des comportements de consultation de sites web, des courriels, des achats électroniques sur Internet, de la messagerie texte et des appels téléphoniques.

7. Procédé selon la revendication 1, dans lequel les données de publicité sont fournies à partir d'un serveur de publicité situé au niveau d'une super tête de réseau et les données de publicité sont introduites dans les données de vidéo au niveau d'une tête de réseau régionale.

8. Système de distribution de publicité dans un système de télévision sur protocole Internet (IPTV), comprenant :
un processeur (320) en communication avec une mémoire (322) ; et
un programme informatique stocké dans la mémoire (322), contenant des instructions destinées à être exécutées par le processeur (320), le programme informatique comprenant en outre :
des instructions visant à accepter, au niveau d'un serveur de zone résidentielle IPTV (501, 506), les données de publicité ciblée domestique en provenance d'un client annonceur, destinées à un segment ciblé, au sein d'une zone résidentielle (501), sélectionné à partir d'une population d'abonnés IPTV sur la base de données de profils d'abonnés IPTV ;
des instructions visant à introduire les données de publicité ciblée domestique dans des données de vidéo domestique au niveau du serveur de zone résidentielle IPTV (501, 506) ;
des instructions visant à envoyer les données de vidéo domestique, du serveur de zone résidentielle IPTV (501, 506) à des dispositifs clients (508) associés à des membres du segment sélectionné dans la zone résidentielle (501) de la population d'abonnés IPTV ;
le système étant **caractérisé en ce que** le programme informatique comporte en outre :
des instructions visant à recevoir, au niveau du serveur de zone d'itinérance IPTV (503, 506), une demande en provenance d'un dispositif client (508) concernant des données de publicité domestique ;
des instructions visant à déterminer, sur la base d'une adresse d'enregistrement domestique pour le dispositif client (508), que le dispositif client (508) se situe dans une zone d'itinérance (503) desservie par un serveur de zone d'itinérance IPTV (503, 506) ;
des instructions visant à envoyer les données de publicité domestique, du serveur de zone résidentielle IPTV (501, 506) au serveur de zone d'itinérance IPTV (503, 506) au sein de la zone d'itinérance (503) ;
des instructions visant à introduire les données de publicité ciblée domestique dans des données de vidéo d'itinérance, au niveau d'un serveur de zone d'itinérance IPTV (503, 506) pour la zone d'itinérance (503) contenant le dispositif client (508) enregistré au sein de la zone résidentielle (501) ;
des instructions visant à envoyer, à partir du serveur de zone d'itinérance IPTV (503, 506), les données de vidéo d'itinérance, avec les données de publicité ciblée domestique, au dispositif client (508) au sein de la zone d'itinérance (503) ; et
des instructions visant à signaler, au client annonceur, une quantité de membres du segment ciblé ayant reçu les données de publicité ciblée domestique au sein de la zone résidentielle (501) à partir du serveur de zone résidentielle IPTV (501, 506), ainsi que le nombre de membres du segment ciblé ayant reçu la publicité ciblée domestique au sein de la zone d'itinérance (503) à partir du serveur de zone d'itinérance IPTV (503, 506).

9. Système selon la revendication 8, dans lequel, dans le programme informatique, les instructions de signalement comportent en outre des instructions visant à signaler, au client annonceur, une quantité de membres du segment ciblé ayant consulté l'ensemble des données de publicité ciblée de bout en bout sans changer de canaux IPTV, à partir des données de publicité ciblée.

10. Système selon la revendication 8, dans lequel, dans le programme informatique, les instructions de signalement comportent en outre des instructions visant à signaler, au client annonceur, une quantité de membres du segment ciblé ayant reçu les données de publicité ciblée, ainsi qu'un instant au cours de la distribution de données de publicité ciblée au cours duquel un changement de canal IPTV a été rencontré.

11. Système selon la revendication 8, dans lequel le programme informatique comporte en outre des instructions visant à envoyer la publicité domestique en monodiffusion au serveur d'itinérance lorsqu'un nombre de dispositifs clients d'itinérance est inférieur à un nombre seuil de dispositifs clients d'itinérance demandeurs, et dans lequel le serveur résidentiel envoie la publicité domestique en multidiffusion au serveur d'itinérance lorsqu'un nombre de dispositifs clients d'itinérance demandeurs est égal ou supérieur au nombre seuil de dispositifs clients d'itinérance demandeurs.

12. Système selon la revendication 8, dans lequel les données de profil comportent des données indiquant les programmes qui sont regardés, le temps passé à les regarder, et l'heure de la journée à laquelle ils sont regardés, la publicité reçue, la publicité regardée, des données enregistrées sur un enregistreur vidéo numérique (DVR), les instants d'occurrence de changement de canaux, des données recueillies connexes à des comportements de consultation de sites web, des cournels, des achats électroniques sur Internet, de la messagerie texte et des appels téléphoniques.

13. Système selon la revendication 8, dans lequel un serveur de publicité est situé au niveau d'une super tête de réseau en vue de fournir les données de publicité, et les données de publicité sont introduites dans les données de vidéo au niveau d'une tête de réseau régionale.

14. Support lisible par ordinateur sur lequel est stocké un programme informatique destiné à mettre en oeuvre le procédé selon l'une quelconque des revendications 1 à 7.
